# EUROPEAN PATENT APPLICATION

(11) **EP 4 029 899 A1**
(43) Date of publication of application: **20.07.2022**
(21) Application number: 20863299.2
(22) Date of filing: 19.08.2020
(51) Int. Cl.: C08G 69/16, C08G 69/28, C08G 69/36

(54) **METHOD FOR PRODUCING COPOLYMERIZED POLYAMIDE**

(30) Priority: 12.09.2019 JP 2019166139; 30.03.2020 JP 2020059701
(71) Applicant: Ube Industries, Ltd., Yamaguchi 755-8633 (JP)
(72) Inventor: MIYAZAKI, Takamasa, Ube-shi, Yamaguchi 755-8633 (JP); DOI, Takashi, Ube-shi, Yamaguchi 755-8633 (JP); KURACHI, Koichiro, Ube-shi, Yamaguchi 755-8633 (JP); FUJII, Hiroyuki, Ube-shi, Yamaguchi 755-8633 (JP); ABE, Masanori, Ube-shi, Yamaguchi 755-8633 (JP); TSUJIMOTO, Kuniteru, Ube-shi, Yamaguchi 755-8633 (JP); YAMAGUCHI, Hisaya, Ube-shi, Yamaguchi 755-8633 (JP); MAKIHARA, Yasuhisa, Ube-shi, Yamaguchi 755-8633 (JP); HAYASHI, Tessu, Ube-shi, Yamaguchi 755-8633 (JP)
(74) Representative: Hoffmann Eitle
(86) International application number: PCT/JP2020/031240
(87) International publication number: WO 2021/049266

(57) **Abstract**

The present invention relates to a method for producing a copolymerized polyamide, which can obtain a copolymerized polyamide having a good quality efficiently, which comprises: a first step: a step of preparing a mixed solution by mixing ε-caprolactam (A) and adipic acid (B) at 69°C or higher and lower than 115°C, wherein solid adipic acid (B) is added to liquid ε-caprolactam (A) to carry out mixing of ε-caprolactam (A) and adipic acid (B), and the amount of ε-caprolactam (A) used is 1 to 20 mol per 1 mol of adipic acid (B), and a second step: a step of mixing the mixed solution obtained in the first step with hexamethylenediamine (C) and then reacted to obtain a copolymerized polyamide.

## Description

### TECHNICAL FIELD

The present invention relates to a method for producing a copolymerized polyamide.

### BACKGROUND ART

Heretofore, as a method for producing a copolymerized polyamide, for example, a method in which a dicarboxylic acid and a diamine are mixed in water to form a salt (amide salt), and then the mixed solution is heated and polymerized (for example, see Non-Patent Document 1), and a method in which adipic acid in a molten state and hexamethylenediamine in a molten state are mixed, and heated and polymerized (for example, see Patent Document 1) are disclosed.

Also, as a method for producing a copolymerized polyamide, a method in which terephthalic acid, an aqueous hexamethylenediamine solution, caprolactam and water are mixed to form an aminocarboxylic acid salt, and then heated and polymerized (for example, see Patent Document 2 (Example 8)), and a method in which an ω-lactam and a dicarboxylic acid are heated and melted at a temperature exceeding the melting point of the dicarboxylic acid to polymerize to obtain an oligomer having carboxylic acids on both terminals, and then a diamine is added to carry out further condensation reaction (for example, see Patent Document 3 (Example 1), Patent Document 4 (Comparative Example 301)) are disclosed.

Further, in Patent Document 5, a method in which a solid dicarboxylic acid is mixed with a liquid lactam, and the mixture is reacted with a diamine to produce a copolymerized polyamide is disclosed. Further, in Patent Document 5, there are described an example in which adipic acid and ε-caprolactam are mixed at 115°C, and an example in which dodecanedioic acid and laurin lactam are mixed at 115°C, and the mixture is reacted with a decanediamine to produce a colorless copolymerized polyamide.

### PRIOR ART DOCUMENTS

### PATENT DOCUMENTS

Patent Document 1: JP 2010-53359A
Patent Document 2: JP 2010-116575A
Patent Document 3: JP Hei.3-111424A
Patent Document 4: WO 2011/081099
Patent Document 5: JP Hei.9-124542A

### NON-PATENT DOCUMENT

Non-Patent Document 1: "New polymer producing process" edited and written by Yasuharu Saeki, Shinji Omi, Kogyo Chosakai Publishing Co., Ltd.

### SUMMARY OF THE INVENTION

### PROBLEMS TO BE SOLVED BY THE INVENTION

In the methods described in Patent Documents 1 and 2, it is necessary to mix the dicarboxylic acid and the diamine in water to form a salt (amide salt), so that a large amount of water must be removed during or after the reaction, whereby there is a problem that a device for that purpose and a large amount of energy are required. Also, in the methods described in Patent Documents 3 and 4, the temperature at which the melt is obtained is high, so that there is a fear that coloring (for example, yellow coloring) of the obtained polyamide resin becomes remarkable.

As in Patent Document 5, when adipic acid and caprolactam are mixed at 115°C, there is a fear that coloring (for example, yellow coloring) of the obtained polyamide resin becomes remarkable.

An object of the present invention is to provide a method for producing a copolymerized polyamide, which can efficiently obtain a copolymerized polyamide having good quality.

### MEANS TO SOLVE THE PROBLEMS

The problems of the present invention are solved by the method for producing a copolymerized polyamide of [1] to [10].
[1] A method for producing a copolymerized polyamide which comprises:
   a first step: a step of preparing a mixed solution by mixing ε-caprolactam (A) and adipic acid (B) at 69°C or higher and lower than 115°C, wherein solid adipic acid (B) is added to liquid ε-caprolactam (A) to carry out mixing of ε-caprolactam (A) and adipic acid (B), and the amount of s-caprolactam (A) used is 1 to 20 mol per 1 mol of adipic acid (B),
   and
   a second step: a step of mixing the mixed solution obtained in the first step with hexamethylenediamine (C) and then reacted to obtain a copolymerized polyamide
[2] The method for producing a copolymerized polyamide of [1], wherein in the first step, the mixing of ε-caprolactam (A) and adipic acid (B) is carried out at 69°C to 110°C.
[3] The method for producing a copolymerized polyamide of [1] or [2], wherein in the first step, the amount of ε-caprolactam (A) used is 2 to 15 mol per 1 mol of adipic acid (B).
[4] The method for producing a copolymerized polyamide of any of [1] to [3], wherein in the first step, chromaticity of the obtained mixed solution is less than 0.5.
[5] The method for producing a copolymerized polyamide of any of [1] to [4], wherein in the second step, hexamethylenediamine (C) is added at 20 to 100°C.
[6] The method for producing a copolymerized polyamide of any of [1] to [5], wherein in the second step, a reaction temperature of the mixed solution obtained in the first step and hexamethylenediamine (C) is 180 to 300°C.
[7] The method for producing a copolymerized polyamide of any of [1] to [6], wherein in the second step, a reaction pressure of the mixed solution obtained in the first step and hexamethylenediamine (C) is 0.05 to 0.5 MPa.
[8] The method for producing a copolymerized polyamide of any of [1] to [7], wherein in the second step, the amount of hexamethylenediamine (C) used is 0.01 to 100 mol per 1 mol of adipic acid (B) used in the first step.
[9] The method for producing a copolymerized polyamide of any of [1] to [8], wherein in the total structural unit of the copolymerized polyamide obtained in the second step, the content of a structural unit derived from ε-caprolactam (A) is 10 to 98 mol%, the content of a structural unit derived from adipic acid (B) is 1 to 45 mol%, and the content of a structural unit derived from hexamethylenediamine (C) is 1 to 45 mol%.
[10] The method for producing a copolymerized polyamide of any of [1] to [9], which further comprises:
   a third step: a step of extracting the copolymerized polyamide obtained in the second step from the container at any time.

### EFFECTS OF THE INVENTION

According to the present invention, it is possible to provide a method for producing a copolymerized polyamide, which can efficiently obtain a copolymerized polyamide having good quality.

### BRIEF DESCRIPTION OF THE DRAWINGS

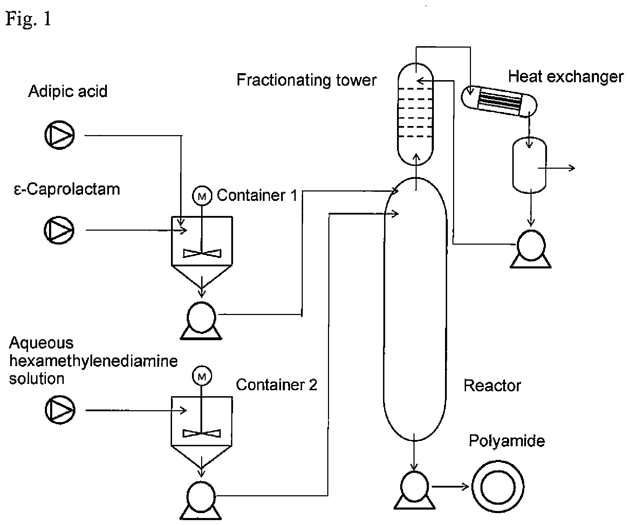

Fig. 1 is a drawing showing an example of the producing apparatus used in the method for producing a copolymerized polyamide.

### EMBODIMENTS TO CARRY OUT THE INVENTION

### [Method for producing copolymerized polyamide]

The method for producing a copolymerized polyamide comprises:
a first step: a step of preparing a mixed solution by mixing ε-caprolactam (A) and adipic acid (B) at 69°C or higher and lower than 115°C, wherein solid adipic acid (B) is added to liquid ε-caprolactam (A) to carry out mixing of ε-caprolactam (A) and adipic acid (B), and the amount of ε-caprolactam (A) used is 1 to 20 mol per 1 mol of adipic acid (B),
and
a second step: a step of mixing the mixed solution obtained in the first step with hexamethylenediamine (C) and then reacted to obtain a copolymerized polyamide.

Incidentally, hereinafter ε-caprolactam (A), adipic acid (B) and hexamethylenediamine (C) may be collectively referred to as "raw materials", or may be referred to as individual respective raw materials. In addition, "or less" means "the same or less than" and "or more" means "the same or exceeding".

A copolymerized polyamide can be efficiently obtained by a method for producing a copolymerized polyamide. That is, the main component of water formed in the step of producing the copolymerized polyamide is water generated at the copolymerization. Therefore, it is not required to carry out complicated operations such as removing a large amount of water, etc., which causes at the time of using an aqueous solution. Also, according to the method for producing a copolymerized polyamide, a copolymerized polyamide having good quality can be obtained. That is, coloring (for example, yellowing) of the resulting copolymerized polyamide is reduced or almost not exist.

The method for producing a copolymerized polyamide may be carried out by continuous system, or may be carried out by semi-batch system or batch system.

### (Copolymerized polyamide)

The copolymerized polyamide, which is a product of the method for producing a copolymerized polyamide, is an ε-caprolactam/hexamethylenediaminoadipic acid copolymer (polyamide 6/66), and has a structural unit derived from ε-caprolactam (A), a structural unit derived from adipic acid (B), and a structural unit derived from hexamethylenediamine (C).

A suitable content of each structural unit in all the structural units of the copolymerized polyamide (the total molar number of the structural unit derived from ε-caprolactam (A), the structural unit derived from adipic acid (B), and the structural unit derived from hexamethylenediamine (C)) is indicated below. The content of the structural unit derived from ε-caprolactam (A) is 10 to 98 mol%, that of the structural unit derived from adipic acid (B) is 1 to 45 mol%, and that of the structural unit derived from hexamethylenediamine (C) is 1 to 45 mol%. Here, the content of the structural unit of the copolymerized polyamide can be obtained from the charged amount of each raw material.

### (First step)

The first step is a step of preparing a mixed solution by mixing ε-caprolactam (A) and adipic acid (B) at 69 to 115°C, wherein solid adipic acid (B) is added to liquid ε-caprolactam (A) to carry out mixing of ε-caprolactam (A) and adipic acid (B), and the amount of ε-caprolactam (A) used is 1 to 20 mol per 1 mol of adipic acid (B).

ε-Caprolactam (A) and adipic acid (B) are desirably treated in advance to remove oxygen therein in order to prevent coloring or degradation during the steps of producing the copolymerized polyamide.

In the first step, the mixing of ε-caprolactam (A) and adipic acid (B) is carried out at 69°C or higher and lower than 115°C. Specifically, in the first step, the mixing is carried out by the method in which ε-caprolactam (A) is heated to its melting point of 69°C or higher and melted to obtain a liquid (melting liquid), and at 69°C or higher and lower than 115°C, adipic acid (B) is added to the above-mentioned liquid (melting liquid) in a solid state.

By subjecting to mixing of ε-caprolactam (A) and adipic acid (B) at 69°C or higher and lower than 115°C, adipic acid (B) in a solid is added to ε-caprolactam (A) in a melting liquid (liquid), mixing of a monomer (A) and adipic acid (B) is carried out so that it is excellent in operability and uniformity. Also, by setting the mixing temperature of ε-caprolactam (A) and adipic acid (B) in the above-mentioned range, thermal degradation of ε-caprolactam (A) or adipic acid (B), or the reaction of ε-caprolactam (A) and adipic acid (B) can be suppressed. If the mixing of ε-caprolactam (A) and adipic acid (B) is carried out at 115°C or higher, coloring (for example, yellow coloring) of the resulting copolymerized polyamide becomes remarkable in some cases. From the viewpoint that the quality of the resulting copolymerized polyamide is more excellent, the mixing of ε-caprolactam (A) and adipic acid (B) is preferably carried out at 69°C to 110°C, further preferably carried out at 69°C to 100°C, and particularly preferably carried out at 69°C to 85°C.

In the first step, the amount of ε-caprolactam (A) used (mixed amount) is 1 to 20 mol per 1 mol of adipic acid (B). From the viewpoint that the quality of the resulting copolymerized polyamide is more excellent, in the first step, the amount of ε-caprolactam (A) used is preferably 2 to 15 mol per 1 mol of adipic acid (B), and particularly preferably 3 to 10 mol.

In order to prevent from being colored of the objective copolymerized polyamide, it is preferable to carry out the first step in the absence of oxygen or in an inert gas atmosphere. Here, as the inert gas, there may be mentioned noble gases (helium, neon, argon, etc.), nitrogen, etc. The inert gas may be of one kind or a combination of two or more kinds.

By the first step, a mixed solution containing ε-caprolactam (A) and adipic acid (B) can be obtained. Incidentally, from the viewpoint of preventing from the copolymerized polyamide, which is the final product, being colored, chromaticity of the mixed solution obtained in the first step is preferably 2 or less, more preferably 1.5 or less, further preferably 0.7 or less, and particularly preferably less than 0.5. The chromaticity of the mixed solution can be measured by the method described in Examples described later.

The mixed solution obtained in the first step may be stored as a mixed solution (mixture in a liquid state) prior to the second step, or may be stored as a solid mixture (mixture in a solid state) or a slurry (for example, a slurry state mixture in which part of the solid state adipic acid (B) is dispersed in the melting liquid of ε-caprolactam (A)) by cooling to room temperature (for example, 25°C), etc. Here, the mixed solution obtained in the first step can be a solid mixture, a slurry or a mixed solution at room temperature depending on the melting point of the mixture and the component(s) contained in the mixture, or a saturated dissolution amount of adipic acid (B) to the melting liquid of ε-caprolactam (A). And, when the solid mixture or the slurry is used as the raw material for the second step, the above-mentioned solid mixture or slurry is heated or the like to prepare a mixed solution. According to this procedure, it can be used as the "mixed solution obtained in the first step" in the second step. The method of cooling may be mentioned that a known cooling device is used or the mixed solution is allowed to stand at room temperature. Also, as the heating temperature for obtaining the mixed solution, there may be mentioned a heating temperature for obtaining a uniform mixed solution.

It is particularly preferable that the mixed solution obtained in the first step is made a uniform mixed solution by heating the mixed solution from the viewpoint of transfer to the container in which the second step is carried out. Here, "uniform" means that adipic acid (B) is substantially completely dissolved in ε-caprolactam (A) to form one solution. Incidentally, adipic acid (B) may be dispersed without being dissolved in melting liquid of ε-caprolactam (A) as long as it does not affect the subsequent steps. That is, the method for producing a copolymerized polyamide preferably includes a step of heating the mixed solution obtained in the first step to obtain a uniform mixed solution before the second step. The heating temperature is preferably 69°C or higher and lower than 115°C, more preferably 69°C to 110°C, further preferably 69°C to 100°C, and particularly preferably 69°C to 85°C.

### (Second step)

The second step is a step of obtaining a copolymerized polyamide by mixing the mixed solution (that is, the mixed solution containing ε-caprolactam (A) and adipic acid (B)) obtained in the first step and hexamethylenediamine (C), and then reacting them. In the second step, by reacting the raw materials (ε-caprolactam (A), adipic acid (B) and hexamethylenediamine (C)), a copolymerized polyamide is obtained.

Hexamethylenediamine (C) is as mentioned above. Also, as hexamethylenediamine (C), it may be used as an aqueous solution of hexamethylenediamine (C) with a high concentration (for example, an aqueous solution of 80% by mass of hexamethylenediamine (C)). Incidentally, hexamethylenediamine (C) is desirably treated to remove oxygen therein in advance in order to prevent coloring or degradation in the step of producing the copolymerized polyamide.

When the mixed solution obtained in the first step is in a uniform mixed solution by heating, it is preferable to heat hexamethylenediamine (C) in advance in order to maintain the state. In this case, hexamethylenediamine (C) is added in the second step preferably at 20 to 100°C, more preferably 30 to 90°C, and particularly preferably 40 to 80°C.

Incidentally, the mixing method and the supplying method of the above-mentioned mixed solution obtained in the first step with hexamethylenediamine (C) are not particularly limited. It is preferable to quantitatively supply and mix by a feed pump capable of sending the liquid, or by a system capable of supplying equipped with a known flow meter, densitometer, valve, etc., to the supply line.

In the second step, a reaction temperature of the mixed solution obtained in the first step and hexamethylenediamine (C) is not particularly limited as long as it is a temperature at which the raw materials polymerize to obtain a desired copolymerized polyamide, and it is preferably 180 to 300°C, more preferably 190 to 280°C, and particularly preferably 200 to 260°C. By setting this temperature range, the polymerization time can be shortened and side reactions such as decomposition and gelation can be suppressed.

Also, in the second step, a reaction pressure of the mixed solution obtained in the first step and hexamethylenediamine (C) is not particularly limited, and it is preferably 0.05 to 0.5 MPa, and particularly preferably 0.1 MPa (based on absolute pressure). In order to adjust to the pressure, for example, known vacuum equipment such as a Nash pump, a mechanical booster, a steam ejector, etc., can be used.

In the second step, a used ratio (mixing ratio) of hexamethylenediamine (C) can be appropriately adjusted according to the kind of the objective copolymerized polyamide. In the second step, the amount of hexamethylenediamine (C) used is preferably 0.01 to 100 mol, more preferably 0.1 to 10 mol, and particularly preferably 0.5 to 5 mol per 1 mol of adipic acid (B) used in the first step.

The second step is preferably carried out in the absence of oxygen or under an inert gas atmosphere in order to prevent the objective copolymerized polyamide from being colored. The inert gas is as described in the first step.

By the second step, ε-caprolactam/hexamethylenediaminoadipic acid copolymer (polyamide 6/66) can be obtained. Incidentally, the contained ratio of the structural units in the polyamide 6/66 can be appropriately set according to the amount of the charged amount of the raw material components.

### <Polymerization catalyst>

The second step can be carried out in the presence of a known polymerization catalyst in order to improve productivity. As such a polymerization catalyst, there may be specifically mentioned, for example,
phosphoric acid;
phosphoric acid salt such as sodium phosphate, magnesium phosphate, potassium phosphate, calcium phosphate, vanadium phosphate, manganese phosphate, nickel phosphate, cobalt phosphate, etc.;
hypophosphoric acid salt such as sodium hypophosphite, magnesium hypophosphite, potassium hypophosphite, calcium hypophosphite, vanadium hypophosphite, manganese hypophosphite, nickel hypophosphite, cobalt hypophosphite, etc.;
acidic phosphoric acid ester such as monomethyl phosphate, dimethyl phosphate, monoethyl phosphate, diethyl phosphate, propyl phosphate, isopropyl phosphate, dipropyl phosphate, diisopropyl phosphate, butyl phosphate, isobutyl phosphate, dibutyl phosphate, diisobutyl phosphate, monophenyl phosphate, diphenyl phosphate, etc.;
phosphoric acid ester such as trimethyl phosphate, triethyl phosphate, tri-n-propyl phosphate, tri-i-propyl phosphate, tri-n-butyl phosphate, tri-i-butyl phosphate, triphenyl phosphate, tri-n-hexyl phosphate, tri-n-octyl phosphate, tri(2-ethylhexyl ) phosphate, tridecyl phosphate, etc.;
phosphorous acid ester such as phosphorous acid dimethyl ester, phosphorous acid diethyl ester, phosphorous acid di-n-propyl ester, phosphorous acid di-i-propyl ester, phosphorous acid di-n-butyl ester, phosphorous acid di-i-butyl ester, phosphorous acid diphenyl ester, phosphorous acid di-n-hexyl ester, phosphorous acid di-n-octyl ester, phosphorous acid di(2-ethylhexyl) ester, phosphorous acid didecyl ester, phosphorous acid etc.;
preferably hypophosphite, and further preferably sodium hypophosphite.

The polymerization catalyst may be one kind or a combination of two or more kinds.

The supplying method and the addition method of the above-mentioned polymerization catalyst are not particularly limited. The above-mentioned polymerization catalyst may be added alone in the form of either an aqueous solution or a water slurry to the reactor. Otherwise, the above-mentioned polymerization catalyst may be present in each raw material ((A), (B) or (C)) in advance. The amount of the above-mentioned polymerization catalyst used is not particularly limited, and when a catalyst containing a phosphorus atom is used, it is preferably 0.1 to 1,000 mass ppm in terms of phosphorus atom based on the total mass of the raw materials.

### (Third step)

The method for producing a copolymerized polyamide can further include a third step. The third step is a step of extracting the copolymerized polyamide formed in the second step from the container at any time. By further including the third step in the method for producing a copolymerized polyamide, the copolymerized polyamide can be produced continuously.

In the third step, the extraction from the container at any time includes, for example, extraction in a continuous system, a semi-batch system or a batch system. Also, in the third step, as a specific method for extracting the copolymerized polyamide produced in the second step, there may be mentioned, for example, the polymer that has reached the bottom of the container (for example, the reactor) may be extracted from the extraction port. This extraction operation is not particularly limited, and it is desirable to use a discharge device such as a perforated plate, a gear pump, or a ball valve at the bottom of the reactor for extracting continuously, stably and quantitatively.

### <Preferred embodiment>

It is preferable that both the first step and the second step are carried out in the absence of oxygen or in the above-mentioned inert gas atmosphere.

### (Reaction apparatus)

The production apparatus used in the method for producing a copolymerized polyamide is constituted by, for example, as shown in Fig. 1, a container 1 for carrying out the first step, a container 2 provided with hexamethylenediamine (C), and a reactor for carrying out the second step. The materials of these containers and reactors are not particularly limited as long as they do not corrode or deteriorate due to contact with raw materials and do not soften and melt by heating.

As the above-mentioned reactor, known reactors such as a tank type continuous reaction apparatus, a tube type continuous reaction apparatus, etc., are used, and the number of reactors can be changed depending on the production amount, etc., and when a plurality of reactors are used, it may be arranged in series or in parallel.

The above-mentioned reactor is desirably provided with a fractionating tower for distilling off water (water contained in raw materials or generated water) or each raw material, and may be provided with a known decompression equipment such as a Nash pump, a mechanical booster, and a steam ejector.

It is desirable to install a heat exchanger on the upper part of the fractionating tower to condense the distillate gas and carry out a reflux operation to improve separation efficiency. Incidentally, within the range which does not impair the effects of the present invention, necessary devices and apparatuses other than the above-mentioned may be attached.

Incidentally, the fractionating tower is preferably a tower having a tray (shelf) and/or a filler as an internal. Here, the internal means a portion inside the tower where contact of gas and liquid is actually carried out.

As the above-mentioned tray, for example, a bubble cap tray, a porous plate tray, a ripple tray, a ballast tray, a valve tray, a countercurrent tray, a uniflux tray, a super flak tray, a max flak tray, a dual flow tray, a grid plate tray, a turbogrid plate tray, a Kittel tray, an Oldershaw type porous plate, etc., are suitably used.

As the above-mentioned filler, for example, random packing such as Raschig ring, Lessing ring, Pall ring, Berl saddle, Intalox saddle, Dixon packing, McMahon packing, Heli pack, etc., or structured packing such as Mellapak, Gempack, Techno pack, Flexi pack, Sulzer packing, goodroll packing and glitch grid, etc., are suitably used.

### EXAMPLES

Hereinafter, the present invention will be specifically explained by referring to Examples, but the scope of the present invention is not limited to these.

### (Measurement method of chromaticity)

Standard solutions with each chromaticity which show coloration in which chromaticity when 1 mg of platinum in potassium chloroplatinate and 0.5 mg of cobalt in cobalt chloride are contained in 1 L of purified water is made 1, and absorbance at the wavelength of 370 nm of each chromaticity standard solution is measured. Then, a calibration curve of chromaticity and absorbance is prepared. Next, absorbance at the wavelength of 370 nm of the 50% by weight aqueous solution of the mixed solution obtained in the first step is measured. The chromaticity which accorded with the absorbance is to be made the chromaticity of the mixed solution obtained in the first step.

### (Confirmation method of yellow coloring)

Regarding the obtained copolymerized polyamide, yellow index was measured using a color meter (manufactured by Nippon Denshoku Industry Co., Ltd., ZE6000) in accordance with JIS K 7373.

### Example 1 (Production of copolymerized polyamide (polyamide 6/66))

### (First step)

Under a nitrogen atmosphere, ε-caprolactam was added to a container 1 (volume: 1 L) and heated to 80°C to melt it, and then, adipic acid was added thereto while stirring and the mixture was maintained at the same temperature for 24 hours to obtain a mixed solution (adipic acid content: 12% by mass, ε-caprolactam/adipic acid=778/82 (molar ratio)).

Incidentally, chromaticity of the obtained mixed solution was less than 0.5.

### (Second step)

Under a nitrogen atmosphere, an 80% by mass hexamethylenediamine aqueous solution was added to a container 2 (volume: 1 L) and heated while stirring to bring the liquid temperature to 60°C. Then, the mixed solution obtained in the first step was fed from the container 1 with 56.5 g/h (ε-caprolactam: 439.4 mmol/h, adipic acid: 46.5 mmol/h) and the above-mentioned hexamethylenediamine aqueous solution with 6.9 g/h (hexamethylenediamine: 47.8 mmol/h) to a tank-type reactor having an inner volume of 1 L and equipped with a stirring device, and then, the mixture was heated to 230°C and subjected to polymerization reaction for 4 hours while distilling off water to obtain a copolymerized polyamide.

Incidentally, the amount of water distilled off during the polymerization reaction was 3.0 g/h. Also, yellow coloring was not observed in the obtained copolymerized polyamide.

### Example 2 (Production of copolymerized polyamide (polyamide 6/66))

### (First step)

Under a nitrogen atmosphere, ε-caprolactam was added to a container 1 (volume: 1 L) and heated to 80°C to melt it, and then, adipic acid was added thereto while stirring and the mixture was maintained at the same temperature for 12 hours to obtain a mixed solution (adipic acid content: 12% by mass, ε-caprolactam/adipic acid=778/82 (molar ratio)).

Incidentally, chromaticity of the obtained mixed solution was less than 0.5.

### (Second step)

Under a nitrogen atmosphere, an 80% by mass hexamethylenediamine aqueous solution was added to a container 2 (volume: 1 L) and heated while stirring to bring the liquid temperature to 60°C. Then, the mixed solution obtained in the first step was fed from the container 1 with 56.5 g/h (ε-caprolactam: 439.4 mmol/h, adipic acid: 46.5 mmol/h) and the above-mentioned hexamethylenediamine aqueous solution with 6.9 g/h (hexamethylenediamine: 47.8 mmol/h) to a tubular reactor (length of 620 mm, inner diameter 20 mm), and then, the mixture was heated to 230°C and subjected to polymerization reaction while distilling off water to obtain a copolymerized polyamide.

Incidentally, the amount of water distilled off during the polymerization reaction was 3.0 g/h.

### (Third step)

After 2.7 hours from the start of feed in the second step, a produced copolymerized polyamide was obtained from the extraction port at the bottom of the reactor. Yellow coloring was not observed in the obtained copolymerized polyamide. Incidentally, during the third step was carried out, the first step and the second step were also carried out, the amount of water distilled off was small, and the copolymerized polyamide could be produced efficiently and continuously.

### Example 3 (Production of copolymerized polyamide (polyamide 6/66))

### (First step)

Under a nitrogen atmosphere, ε-caprolactam was added to a container 1 (volume: 1 L) and heated to 110°C to melt it, and then, adipic acid was added thereto while stirring and the mixture was maintained at the same temperature for 24 hours to obtain a mixed solution (adipic acid content: 12% by mass, ε-caprolactam/adipic acid= 778/82 (molar ratio)).

Incidentally, chromaticity of the obtained mixed solution was 0.7.

### (Second step)

Under a nitrogen atmosphere, an 80% by mass hexamethylenediamine aqueous solution was added to a container 2 (volume: 1 L) and heated while stirring to bring the liquid temperature to 60°C. Then, the mixed solution obtained in the first step was fed from the container 1 with 56.5 g/h (ε-caprolactam: 439.4 mmol/h, adipic acid: 46.5 mmol/h) and the above-mentioned hexamethylenediamine aqueous solution with 6.9 g/h (hexamethylenediamine: 47.8 mmol/h) to a tank-type reactor having an inner volume of 1 L and equipped with a stirring device, and then, the mixture was heated to 230°C and subjected to polymerization reaction for 4 hours while distilling off water to obtain a copolymerized polyamide.

Incidentally, the amount of water distilled off during the polymerization reaction was 3.0 g/h. Also, yellow coloring was not observed in the obtained copolymerized polyamide.

### Example 4 (Production of copolymerized polyamide (polyamide 6/66))

### (First step)

Under a nitrogen atmosphere, ε-caprolactam was added to a container 1 (volume: 1 L) and heated to 80°C to melt it, and then, adipic acid was added thereto while stirring and the mixture was maintained at the same temperature for 24 hours to obtain a mixed solution (adipic acid content: 20% by mass, ε-caprolactam/adipic acid= 399.4/77.3 (molar ratio)).

Incidentally, chromaticity of the obtained mixed solution was less than 0.5.

### (Second step)

Under a nitrogen atmosphere, an 80% by mass hexamethylenediamine aqueous solution was added to a container 2 (volume: 1 L) and heated while stirring to bring the liquid temperature to 60°C. Then, the mixed solution obtained in the first step was fed from the container 1 with 56.5 g/h (ε-caprolactam: 399.4 mmol/h, adipic acid: 77.3 mmol/h) and the above-mentioned hexamethylenediamine aqueous solution with 11.6 g/h (hexamethylenediamine: 79.8 mmol/h) to a tank-type reactor having an inner volume of 1 L and equipped with a stirring device, and then, the mixture was heated to 230°C and subjected to polymerization reaction for 4 hours while distilling off water to obtain a copolymerized polyamide.

Incidentally, the amount of water distilled off during the polymerization reaction was 3.5 g/h. Also, yellow coloring was not observed in the obtained copolymerized polyamide.

### Comparative Example 1 (Production of copolymerized polyamide (polyamide 6/66))

Under a nitrogen atmosphere, ε-caprolactam was added to a container 1 (volume: 1 L) and heated to 80°C to melt it, and maintained for 24 hours while stirring.

Under a nitrogen atmosphere, to a container 2 (volume: 1 L) were added adipic acid, water and an 80% by mass hexamethylenediamine aqueous solution in this order to obtain a 50% by mass aqueous amide salt solution comprising adipic acid and hexamethylenediamine, and then, the temperature of the aqueous solution was maintained at 60°C.

ε-Caprolactam was fed from the container 1 with 49.7 g/h (ε-caprolactam: 439.4 mmol/h) and the above-mentioned aqueous amide salt solution from the container 2 with 24.4 g/h (adipic acid: 46.5 mmol/h, hexamethylenediamine: 46.5 mmol/h) to a tubular reactor (length of 600 mm, inner diameter 20 mm), and then, the mixture was heated to 230°C and subjected to polymerization reaction while distilling off water.

Incidentally, the amount of water distilled off during the polymerization reaction was 13 g/h.

After 2.7 hours from the start of feed of ε-caprolactam, a produced copolymerized polyamide was obtained from the extraction port at the bottom of the reactor. Yellow coloring was not observed in the obtained copolymerized polyamide. Incidentally, during extraction of the copolymerized polyamide, the reaction of adipic acid, hexamethylenediamine and ε-caprolactam occurred, and the copolymerized polyamide could be produced continuously. However, the amount of water to be distilled off was large, and it could not be said that it was efficient.

### Comparative Example 2 (Production of copolymerized polyamide (polyamide 6/66))

### (First step)

Under a nitrogen atmosphere, ε-caprolactam was added to a container 1 (volume: 1 L) and heated to 120°C to melt it, and then, adipic acid was added thereto while stirring and the mixture was maintained at the same temperature for 12 hours to obtain a mixed solution (adipic acid content: 12% by mass, ε-caprolactam/adipic acid= 778/82 (molar ratio)).

Incidentally, chromaticity of the obtained mixed solution was 6.4.

### (Second step)

Under a nitrogen atmosphere, an 80% by mass hexamethylenediamine aqueous solution was added to a container 2 (volume: 1 L) and heated while stirring to bring the liquid temperature to 60°C. Then, the mixed solution obtained in the first step was fed from the container 1 with 56.5 g/h (ε-caprolactam: 439.4 mmol/h, adipic acid: 46.5 mmol/h) and the above-mentioned hexamethylenediamine aqueous solution with 6.9 g/h (hexamethylenediamine: 47.8 mmol/h) to a tubular reactor (length of 620 mm, inner diameter 20 mm), and then, the mixture was heated to 230°C and subjected to polymerization reaction while distilling off water.

Incidentally, the amount of water distilled off during the polymerization reaction was 3.0 g/h.

### (Third step)

After 2.7 hours from the start of feed in the second step, a produced copolymerized polyamide was started from the extraction port at the bottom of the reactor. Incidentally, during the third step was carried out, the first step and the second step were also carried out, the amount of water distilled off was small, and the copolymerized polyamide could be produced efficiently and continuously. However, yellow coloring was observed in the obtained copolymerized polyamide.

### Comparative Example 3 (Production of copolymerized polyamide (polyamide 6/66))

### (First step)

Under a nitrogen atmosphere, ε-caprolactam was added to a container 1 (volume: 1 L) and heated to 160°C (melting point (152°C) of adipic acid or higher) to melt it, and then, adipic acid was added thereto while stirring and the mixture was maintained at the same temperature for 24 hours to obtain a mixed solution (adipic acid content: 12% by mass, ε-caprolactam/adipic acid=778/82 (molar ratio)).

Incidentally, chromaticity of the obtained mixed solution was 5.5.

### (Second step)

Under a nitrogen atmosphere, an 80% by mass hexamethylenediamine aqueous solution was added to a container 2 (volume: 1 L) and heated while stirring to bring the liquid temperature to 60°C. Then, the mixed solution obtained in the first step was fed from the container 1 with 56.5 g/h (ε-caprolaetam: 439.4 mmol/h, adipic acid: 46.5 g/h) and the above-mentioned hexamethylenediamine aqueous solution from the container 2 with 6.9 g/h (hexamethylenediamine: 47.8 mmol/h) to a tubular reactor (length of 600 mm, inner diameter 20 mm), and then, the mixture was heated to 230°C and subjected to polymerization reaction while distilling off water.

Incidentally, the amount of water distilled off during the polymerization reaction was 3.0 g/h.

### (Third step)

After 2.7 hours from the start of feed in the second step, a produced copolymerized polyamide was obtained from the extraction port at the bottom of the reactor. Incidentally, during the third step was carried out, the first step and the second step were also carried out, the amount of water distilled off was small, and the copolymerized polyamide could be produced efficiently and continuously. However, yellow coloring was observed in the obtained copolymerized polyamide.

The results are summarized in Table 1.

**[Table 1]**

| | First step | | | Second step | |
|---|---|---|---|---|---|
| | Mixing temperature (°C) | Amount of ε-caprolactam (A) used per 1 mole of adipic acid (B) | Chromaticity of mixed solution | Distilled amount of water (g/h) | Coloring of copolymerized polyamide |
| Example 1 | 80 | 9.49 | less than 0.5 | 3.0 | None |
| Example 2 | 80 | 9.49 | less than 0.5 | 3.0 | None |
| Example 3 | 110 | 9.49 | 0.7 | 3.0 | None |
| Example 4 | 80 | 5.17 | less than 0.5 | 3.5 | None |
| Comparative Example 1 | 80 | 9.49 | - | 13 | None |
| Comparative Example 2 | 120 | 9.49 | 6.4 | 3.0 | Present |
| Comparative Example 3 | 160 | 9.49 | 5.5 | 3.0 | Present |

From the above results, it can be understood that in Examples, the amount of water distilled off is smaller than that of Comparative Examples, so that the copolymerized polyamide can be produced efficiently. Also, it can be understood that the method for producing a copolymerized polyamide of the present invention can be suitably applied not only to the batch system (Example 1) but also to the continuous system (Example 2). Further, in the case of Example 2 including the third step, a copolymerized polyamide having good quality could be produced continuously. As a comparison between Examples 3 and 4, when the mixing temperature was lowered, chromaticity of the mixed solution obtained in the first step became smaller.

On the other hand, Comparative Example 1 is a method in which adipic acid (B) and hexamethylenediamine (C) were mixed in water to form a salt (amide salt), and then, the mixed solution was heated and polymerized, so that the amount of water distilled off was larger. Accordingly, in Comparative Example 1, a copolymerized polyamide could not be produced efficiently.

In Comparative Examples 2 and 3, ε-caprolactam (A) and adipic acid (B) were mixed at a temperature of 115°C or higher, so that coloring of the mixed solution obtained in the first step was observed. Also, in Comparative Example 2 and 3 in which chromaticity of the mixed solution obtained in the first step was larger, yellow coloring was observed in the obtained copolymerized polyamide. Accordingly, in Comparative Example 2 and 3, a copolymerized polyamide having good quality could not be produced. From the above, it can be said that in Patent Document 5 (JP Hei.9-124542A), which describes only an example in which the mixing temperature of ε-caprolactam and adipic acid is 115°C, a copolymerized polyamide having good quality could not be produced.

## Claims

1. A method for producing a copolymerized polyamide which comprises:
a first step: a step of preparing a mixed solution by mixing ε-caprolactam (A) and adipic acid (B) at 69°C or higher and lower than 115°C, wherein solid adipic acid (B) is added to liquid ε-caprolactam (A) to carry out mixing of ε-caprolactam (A) and adipic acid (B), and the amount of ε-caprolactam (A) used is 1 to 20 mol per 1 mol of adipic acid (B),
and
a second step: a step of mixing the mixed solution obtained in the first step with hexamethylenediamine (C) and then reacted to obtain a copolymerized polyamide.

2. The method for producing a copolymerized polyamide according to Claim 1, wherein in the first step, the mixing of ε-caprolactam (A) and adipic acid (B) is carried out at 69°C to 110°C.

3. The method for producing a copolymerized polyamide according to Claim 1 or 2, wherein in the first step, the amount of ε-caprolactam (A) used is 2 to 15 mol per 1 mol of adipic acid (B).

4. The method for producing a copolymerized polyamide according to any one of Claims 1 to 3, wherein in the first step, chromaticity of the obtained mixed solution is less than 0.5.

5. The method for producing a copolymerized polyamide according to any one of Claims 1 to 4, wherein in the second step, hexamethylenediamine (C) is added at 20 to 100°C.

6. The method for producing a copolymerized polyamide according to any one of Claims 1 to 5, wherein in the second step, a reaction temperature of the mixed solution obtained in the first step and hexamethylenediamine (C) is 180 to 300°C.

7. The method for producing a copolymerized polyamide according to any one of Claims 1 to 6, wherein in the second step, a reaction pressure of the mixed solution obtained in the first step and hexamethylenediamine (C) is 0.05 to 0.5 MPa.

8. The method for producing a copolymerized polyamide according to any one of Claims 1 to 7, wherein in the second step, the amount of hexamethylenediamine (C) used is 0.01 to 100 mol per 1 mol of adipic acid (B) used in the first step.

9. The method for producing a copolymerized polyamide according to any one of Claims 1 to 8, wherein in the total structural unit of the copolymerized polyamide obtained in the second step, the content of a structural unit derived from ε-caprolactam (A) is 10 to 98 mol%, the content of a structural unit derived from adipic acid (B) is 1 to 45 mol%, and the content of a structural unit derived from hexamethylenediamine (C) is 1 to 45 mol%.

10. The method for producing a copolymerized polyamide according to any one of Claims 1 to 9, which further comprises:
a third step: a step of extracting the copolymerized polyamide obtained in the second step from the container at any time.
